# EUROPEAN PATENT SPECIFICATION

(11) **EP 0 701 397 B1**
(45) Date of publication and mention of the grant of the patent: **23.12.1998**
(21) Application number: 94917208.4
(22) Date of filing: 31.05.1994
(51) Int. Cl.: A01K 11/00, A01K 35/00, A01K 13/00, A61D 1/02, A61B 17/20

(54) **METHOD AND APPARATUS FOR MARKING ANIMALS**
VERFAHREN UND VORRICHTUNG ZUM MARKIEREN VON TIEREN
PROCEDE ET APPAREIL DE MARQUAGE D'ANIMAUX

(30) Priority: 03.06.1993 NZ 24778293
(43) Date of publication of application: 20.03.1996
(73) Proprietor: STOCKDILL, Neil, Ashburton (NZ)
(72) Inventor: STOCKDILL, Neil, Ashburton (NZ)
(74) Representative: Waldren, Robin Michael
(86) International application number: NZ9400050
(87) International publication number: WO9428709

(56) References cited:
- EP-A- 0 006 395
- EP-A- 0 025 252
- EP-A- 0 381 410
- AU-A- 1 854 034
- AU-A- 5 066 759
- DE-A- 3 737 570
- DE-A- 3 757 570
- GB-A- 2 234 420
- US-A- 1 861 914
- US-A- 2 678 022

## Description

### TECHNICAL FIELD

This invention relates to a method and apparatus for marking animals.

### BACKGROUND ART

Frequently it is desirable for animal owners such as farmers to be able to determine which of their animals have been treated in a particular manner.

One such situation occurs during drenching. Not marking the animals during this treatment process leads to a common problem in that certain animals can be mistakenly drenched more than once, or possibly not at all, and time and money can be wasted while ascertaining which individuals have or have not been drenched.

However existing means of marking animals during drenching are not satisfactory either. One common method of indicating that an animal has been drenched is by marking the animal with a chalk mark placed on the animal's back.

The above method, however, is not satisfactory. To mark with chalk on the animal's back requires a movement separate to the normal drenching movements, consumes further time and slows down the entire drenching process. In flocks/herds consisting of hundreds of such animals, this can increase considerably the time needed to drench an entire flock/herd.

A similar problem arises with other processes, such as vaccination of animals, including sheep, cattle and so forth. A method or apparatus by which application of any form of treatment to group animals, including a means of marking such animals, but without adding to the time of the treatment process, would be a significant advantage over the present methods.

In this specification the term treatment may refer to any process that results in the modification of an animal's state, and may include cosmetic, medical or other treatments.

In this specification the word animal refers to any living organism but will usually be taken to refer to domesticated or farm animals, especially sheep, cattle or deer.

A clinical applicator for injecting and marking patients in which ink is transferred from an absorbent material to a marking means for applying the mark is disclosed by EP-A1-0381410.

An injection syringe with an attachment to mark animals comprising a reservoir for ink and a sponge is disclosed by DE-A-3737570. However, the sponge does not include a backing substance capable of restricting the transfer of ink.

It is an object of the present invention to address the foregoing problems or at least to provide the public with a useful choice.

Further aspects and advantages of the present invention will become apparent from the ensuing description which is given by way of example only.

According to an aspect of the present invention there is provided marking apparatus for marking animals during the treatment of same by humans, capable of retaining a marking substance, and including material capable of restricting the transfer of the marking substance in one direction during application of a treatment device by a human, wherein the marking apparatus is removably attached to the treatment device during the application of the said treatment device.

The treatment device may be any device suitable for treating animals for example a drench gun, vaccinator and so forth. For ease of reference throughout the specification the treatment device shall now be referred to as a drench gun, however it should be appreciated that the invention can be applied to other treatment devices.

The apparatus capable of retaining the marking substance can come in a variety of forms. For example, the apparatus may be a spray gun, ink pad, chalk, marker pen and the like. However, in preferred embodiments the apparatus is in the form of a pad and this shall be referred to as such throughout the specification. It should be appreciated however that this term should be seen in no way as limiting.

The pad may be attached to the drench gun by a variety of means, for example it may be strapped on, glued on or fitted into a bracket. In preferred embodiments, the pad has an aperture through it which enables the pad to be placed onto a suitable part of the drench gun. In preferred embodiments the pad is placed over the nozzle of the drench gun.

The pad may incorporate an absorbent material. The absorbent material may be any type of material, so long as it is capable of retaining the marking substance as well as transferring it when required to the animals. For example, the absorbent material may be latex foam, carpet, cotton wool or rubber.

In preferred embodiments however, the absorbent material is high density rubber. The applicant has found that if the marking substances are liquid, the high density rubber holds the liquid better and longer than low density rubber and the other materials previously mentioned. Preferably the rubber is biodegradable and will break down after a few months in the sunlight.

The marking substance may be any one of suitable marking substances, dependent of course on the nature of the apparatus used. For example, if the apparatus is a spray gun, then the marking substance may be a spray paint. Alternatively, the marking substance may be made of a solid material such as chalk or crayon.

In preferred embodiments, the marking substance is an ink.

One ink which has been found to be particularly useful by the applicants is sold under the name of Neptune Wool Marking Ink. This is a non-toxic, non-flammable water scourable ink and has been approved by the New Zealand Ministry of Agriculture and Fisheries to be used on Wool. Their reference number for this is Lab No: 93 1253. One advantage of this ink is that after storage, it will reactivate with water.

For ease of reference throughout the specification the marking substance shall now be referred to as ink, although again it should be appreciated that this term should not be seen as being limiting.

The ink may be transferred to the animals by a variety of means. For example, there may be a valve capable of releasing the ink which is operable in conjunction with the treatment device. For example, pulling the trigger on a drench gun may cause the ink to be sprayed on to the animal.

In preferred embodiments where the apparatus is in the form of a pad having absorbent material, the ink is transferred to the animal as a consequence of the pad being depressed against the animal. This can easily occur if the pad is close to the nozzle of the drench gun so that as the nozzle is pressed into the animals mouth or other body part to administer the treatment, the pad is depressed at the same time thus marking the animal.

In some embodiments of the present invention the pad may be capable of being re-inked. For example, there may be provided a reservoir of ink which is accessible to the pad. This may be present on the drench gun, or alternatively there may be a quite separate reservoir. For example, the farmer operating the drench gun may have a container of ink near his/her drenching station and can dip the nozzle of the drench gun (and hence the absorbent pad) into the ink as required.

In preferred embodiments however, the nature of the pad is such that only a small portion of the total amount of ink retained by the pad is released during each individual treatment, Thus the pad may be used many times without further addition of ink. In this way, few additional actions are required in the process of drenching and the step of marking the animals takes little time.

In alternative embodiments of the present invention, the pad may be attached to part of the person treating the animals, for example to the arm or hand. This is preferably done in such a way that in the usual process of treatment, the person comes close enough to the animal for the pad to contact the animal to release the marking substance.

In preferred embodiments of the present invention the pad includes a barrier which prevents movement of the ink in one or more directions so as to reduce the chances of the operator of the drench gun and the drench gun itself from being covered with ink from the pad. In preferred embodiments, there is a flat layer of material on the back of the pad which prevents the transfer of ink. A preferred material for this is closed cell foam chemically cross linked as supplied by New Zealand Foam Latex Limited under the reference number PE 45 LD66 Double Black.

A suitable adhesive for joining the barrier to the rubber is a foam latex adhesive.

The present invention may be used for more than just identifying which animals have been treated. In some embodiments, there may be provided a different coloured dye or a differently shaped pad so that the animals can receive distinctive markings according to the type of treatment or other factors (such as the date being treated). For example whereas in preferred embodiments the pad is circular in cross-section, it may be star-shaped, square-shaped, triangular-shaped and so forth.

Many different types of manufacturing methods may be employed with respect to the pad. In one embodiment, the rubber may come in sheet form and have the backing adhered to the back of the sheet. These rubber sheets can be punched through at say ten at a time with a cutting dye to a predetermined size.

A typical thickness of the pad may be in the order of 2.5 centimetres and the diameter of the pad may be in the order of 6 centimetres. The diameter of the aperture which is also punched through the pad, may be complementary to the diameter of most drench gun nozzles or barrels.

The applicant has found a high density rubber pad having the above dimensions is capable of being pre-inked with a measured amount of 2.5 mls of ink. Trials by the applicant have found that this amount of ink enables between 150 and 200 animals to be marked with a single pad.

### BRIEF DESCRIPTION OF DRAWINGS

Further aspects of the present invention will become apparent from the ensuing description which is given by way of example only and with reference to the accompanying drawings in which:
- Figure 1:: is a side view of a device capable of retaining a marking substance in accordance with a preferred embodiment of the present invention; and
- Figure 2:: is a side view of a drench gun and device in accordance with a preferred embodiment of the present invention; and
- Figure 3:: is a side view of a device in accordance with a further preferred embodiment of the present invention.

### BEST MODES FOR CARRYING OUT THE INVENTION

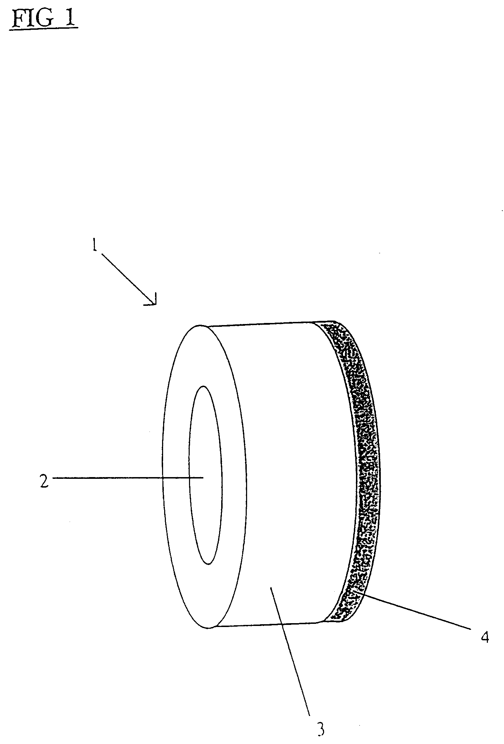

With respect to Figure 1, there is illustrated an apparatus capable of retaining the marking substance in the form of a pad generally indicated by arrow 1.

The pad 1 is substantially circular in cross-section and has an aperture 2 along its central axis.

The pad 1 is comprised of two layers, an absorbent layer 3 and a non-absorbent backing 4.

The absorbent layer 3 is made from high density rubber and has been pre-inked. Deformation of the layer 3 causes the ink held by the rubber 3 to exude. Therefore, pushing the pad 1 against a surface causes that surface to be marked by the ink within the absorbent layer 3.

The non-absorbent backing 4 has been attached to the absorbent layer 3 by a suitable adhesive. The backing 4 prevents ink from travelling from the back of the pad 1.

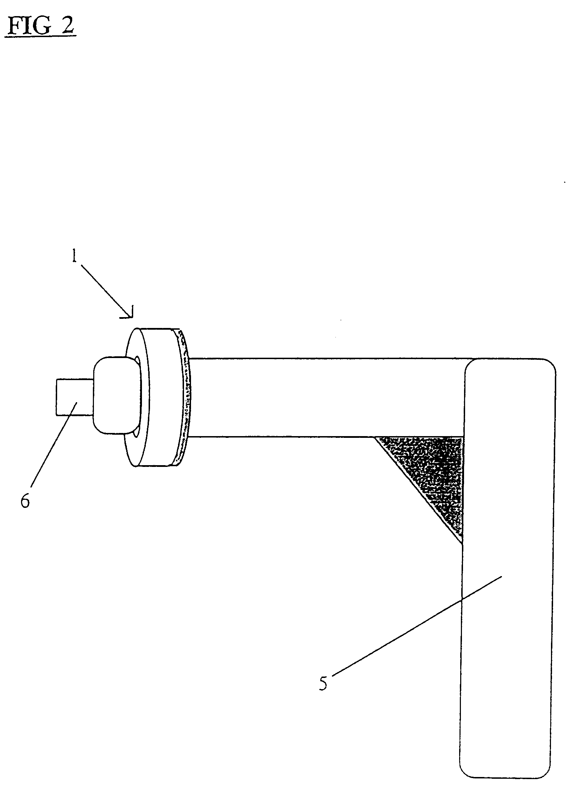

Thus, when the pad 1 is placed on nozzle 6 of a drench gun 5 as illustrated in Figure 2, ink is prevented from transferring to the operator of the gun 5 or to the gun 5 itself.

It can be seen from Figure 2 that if the nozzle 6 of the gun 5 is placed into the mouth of the animal, this will cause deformation of the absorbent layer 3, thus transferring the ink to the animal.

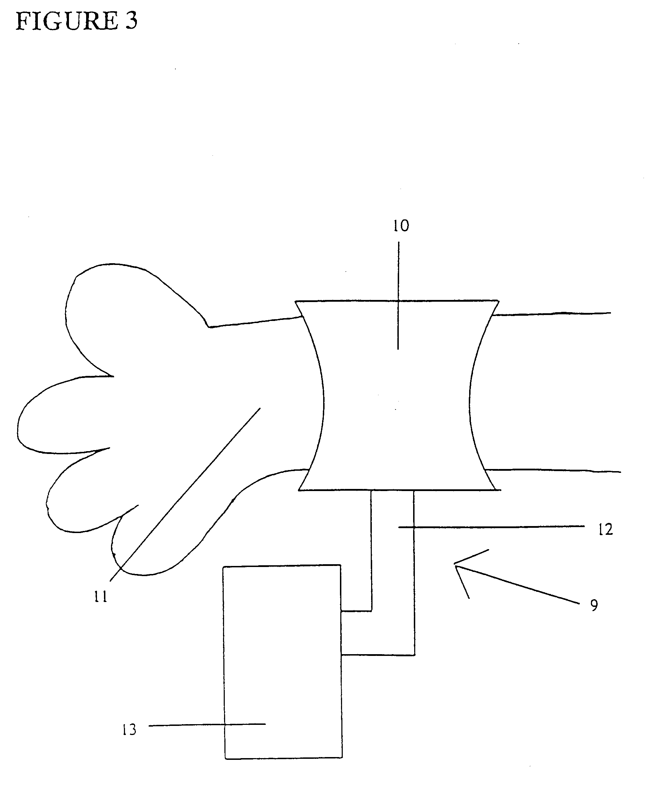

Figure 3 illustrates an alternative device in accordance with one embodiment of the present invention generally indicated by arrow 9.

The device 9 is comprised of a pad 13 of a similar construction to that described with reference to Figures 1 and 2. The pad 13 is attached to a bracket 12 which in turn is connected to an armband 10. The armband 10 fits over the wrist of the person who is administering treatment to the animal. The configuration of the bracket 12 is such that the pad 13 will press against the animal during treatment of same.

Aspects of the present invention have been described by way of example only and it should be appreciated that modifications and additions may be made thereto without departing from the scope of the claims thereof.

## Claims

1. Marking apparatus for marking animals during the treatment of same by humans, capable of retaining a marking substance, and including material (4) capable of restricting the transfer of the marking substance in one direction during application of a treatment device (5, 9) by a human, characterised in that the marking apparatus is removably attached to the treatment device during the application of the said treatment device.

2. Apparatus as claimed in claim 1 which includes an absorbent material (3, 13) capable of absorbing a marking substance and transferring same.

3. Apparatus as claimed in claim 2 when the absorbent material (3, 13) transfers the marking substance when deformed.

4. Apparatus as claimed in any one of claims 2 to 3 wherein the absorbent material (3, 13) is high density rubber.

5. Apparatus as claimed in any one of claims 2 to 4 wherein the absorbent material (3, 13) is biodegradable.

6. Apparatus as claimed in claim 5 wherein the material (4) capable of restricting the transfer of the marking substance is attached to the absorbent layer (3, 13) in the form of a backing.

7. Apparatus as claimed in any one of claims 2 to 6 which includes attachment means (2, 12) enabling the apparatus to be attached to a treatment device (5, 9).

8. Apparatus as claimed in claim 7 when the attachment means is in the form of an aperture (2).

## Patentansprüche

1. Markiervorrichtung zum Markieren von Tieren während deren Behandlung durch den Menschen, die in der Lage ist, eine Markiersubstanz zurückzuhalten, und die ein Material (4) einschließt, das die Übertragung der Markiersubstanz während der Anwendung eines Behandlungsgeräts (5, 9) durch einen Menschen auf eine Richtung beschränkt, dadurch gekennzeichnet, daß die Markiervorrichtung während der Anwendung des Behandlungsgeräts abnehmbar an dem Behandlungsgerät angebracht ist.

2. Vorrichtung nach Anspruch 1, die ein absorbierendes Material (3, 13) einschließt, das in der Lage ist, eine Markiersubstanz zu absorbieren und diese zu übertragen.

3. Vorrichtung nach Anspruch 2, wenn das absorbierende Material (3, 13) die Markierungssubstanz dann überträgt, wenn eine Verformung erfolgt.

4. Vorrichtung nach einem der Ansprüche 2 bis 3, bei der das absorbierende Material (3, 13) ein Gummi von höherer Dichte ist.

5. Vorrichtung nach einem der Ansprüche 2 bis 4, bei der das absorbierende Material (3, 13) biologisch abbaubar ist.

6. Vorrichtung nach Anspruch 5, bei der das Material (4), das in der Lage ist, die Übertragung der Markierungssubstanz zu beschränken, an der absorbierenden Schicht (3, 13) in Form einer Unterlagsschicht angebracht ist.

7. Vorrichtung nach einem der Ansprüche 2 bis 6, die ein Befestigungsmittel (2, 12) einschließt, das es ermöglicht, die Vorrichtung an einem Behandlungsgerät (5, 9) anzubringen.

8. Vorrichtung nach Anspruch 7, wenn das Befestigungsmittel die Form einer Öffnung (2) hat.

## Revendications

1. Appareil de marquage pour le marquage d'animaux au cours du traitement de ceux-ci par des personnes humaines, capable de retenir une substance de marquage et englobant un matérieau (4), capable de restreindre le transfert de la substance de marquage dans une direction au cours de l'application d'un dispositif de traitement (5, 9) par une personne humaine, caractérisé en ce que l'appareil de marquage est fixé de façon amovible au dispositif de traitement au cours de l'application dudit dispositif de traitement.

2. Appareil selon la revendication 1, englobant un matérieau absorbant (3, 13), capable d'absorber une substance de marquage et de la transférer.

3. Appareil selon la revendication 2, dans lequel le matérieau absorbant (3, 13) transfère la substance de marquage lors de sa déformation.

4. Appareil selon l'une quelconque des revendications 2 à 3, dans lequel le matérieau absorbant (3, 13) est du caoutchouc haute densité.

5. Appareil selon l'une quelconque des revendications 2 à 4, dans lequel le matériau absorbant (3, 13) est biodégradable.

6. Appareil selon la revendication 5, dans lequel le matérieau (4) capable de restreindre le transfert de la substance de marquage est fixé à la couche absorbante (3, 13) sous forme d'un support.

7. Appareil selon l'une quelconque des revendications 2 à 6, englobant un moyen de fixation (2, 12), permettant la fixation de l'appareil au dispositif de traitement (5, 9).

8. Appareil selon la revendication 7, dans lequel le moyen de fixation a la forme d'une ouverture (2).
